# DEMANDE DE BREVET EUROPEEN

(11) **EP 1 086 627 A1**
(43) Date de publication de la demande: **28.03.2001**
(21) Numéro de dépôt: 00203037.7
(22) Date de dépôt: 01.09.2000
(51) Int. Cl.: A23P 1/12, A23L 1/164, A23L 1/18

(54) **Procédé de fabrication de produits consommables composites par extrusion dans des tronçons séparés d'un extrudeur**

(30) Priorité: 22.09.1999 EP 99118679
(71) Demandeur: SOCIETE DES PRODUITS NESTLE S.A., 1800 Vevey (CH)
(72) Inventeur: Geromini, Osvaldo, 1350 Orbe (CH); Pfaller, Werner, 1350 Orbe (CH); Bengtsson-Riveros, Annmarie, 1605 Chexbres (CH); Heck, Ernst, 1302 Vufflens-la-Ville (CH); Farnsworth, John T., St. Joseph, MO 64506 (US)
(74) Mandataire: Wavre, Claude-Alain

(57) **Abrégé**

Procédé et installation de fabrication d'un produit consommable composite par double extrusion, dans lesquels on prépare une matière consommable liquide ou pâteuse dans un premier tronçon d'un extrudeur bivis, on cuit-extrude une matière consommable plastifiable dans un second tronçon de l'extrudeur bivis séparé dynamiquement du premier, on obtient au moins un brin d'une masse cuite-extrudée, on le découpe en morceaux, on ajoute la matière consommable liquide ou pâteuse à la masse cuite-extrudée et l'on obtient des morceaux d'un produit consommable composite.

## Description

La présente invention a pour objet un procédé de fabrication d'un produit consommable composite par double extrusion et une installation pour la mise en oeuvre du procédé.

EP0626138 (QUAKER OATS) décrit un procédé de fabrication de céréales instantanées, dans lequel on cuit-extrude un mélange à base de farine de céréale et d'eau, on met en forme de flocons le mélange cuit-extrudé additionné de morceaux de matière alimentaire, on toaste les flocons, on les enrobe avec un sirop de sucre formant un film à leur surface et on les sèche.

US3764715 (QUAKER OATS) décrit un procédé de fabrication d'une céréale instantanée enrobée, dans lequel on prépare un mélange à base de farine de céréale et d'eau, on cuit-extrude-expanse le mélange sous forme d'un brin tubulaire à l'aide d'un extrudeur muni d'une filière de coextrusion comprenant un orifice de sortie annulaire entourant un orifice de sortie central, on injecte un sirop à l'intérieur du brin tubulaire par l'orifice de sortie central, on découpe en morceaux au ras de la filière le brin de céréale contenant le sirop de sucre, et l'on sèche les morceaux de sorte que le sirop qu'ils contiennent diffuse de l'intérieur vers l'extérieur et forme autour d'eux un film de sirop sec.

EP0815729 (SOCIETE DES PRODUITS NESTLE S.A.) décrit un procédé de fabrication d'un produit alimentaire par extrusion, dans lequel on introduit une première matière alimentaire à traiter dans un premier tronçon d'un extrudeur bivis, on introduit une deuxième matière alimentaire à traiter dans un deuxième tronçon de l'extrudeur bivis séparé dynamiquement du premier, on traite ces matières indépendamment chacune dans son tronçon de l'extrudeur, on extrude les deux masses obtenues en les faisant passer au travers d'au moins une filière et l'on découpe les produits extrudés ou coextrudés.

La présente invention a pour but de proposer un procédé et une installation permettant une fabrication simplifiée et particulièrement bien contrôlée d'un produit consommable composite.

A cet effet, dans le procédé selon la présente invention, on prépare une matière consommable liquide ou pâteuse dans un premier tronçon d'un extrudeur bivis, on cuit-extrude une matière consommable plastifiable dans un second tronçon de l'extrudeur bivis séparé dynamiquement du premier, on obtient au moins un brin d'une masse cuite-extrudée, on le découpe en morceaux, on ajoute la matière consommable liquide ou pâteuse à la masse cuite-extrudée et l'on obtient des morceaux d'un produit consommable composite.

De même, l'installation selon la présente invention comprend un extrudeur bivis séparé en deux tronçons distincts par un dispositif de séparation dynamique, au moins une filière, des moyens de découpe et un dispositif d'addition d'une matière liquide ou pâteuse.

Un tel procédé et un tel appareil permettent effectivement une fabrication simplifiée et particulièrement bien contrôlée d'un produit consommable composite.

Le produit consommable composite obtenable par le présent procédé et/ou à l'aide de la présente installation, notamment un produit enrobé, un produit coextrudé à intérieur mou et extérieur croquant ou un produit composite imprégné dans la masse, est également compris dans le cadre de la présente invention.

Dans le présent exposé, l'expression "matière consommable" doit être comprise comme une matière consommable par les êtres humains et/ou comme une matière consommable par les animaux familiers, tels que les chiens ou les chats, par exemple.

L'expression "matière consommable plastifiable" couvre tous les composants introduits ensemble ou séparément, simultanément ou successivement dans le second tronçon de l'extrudeur et cuits-extrudés tous ensemble au moins sur une partie de ce tronçon.

Pour mettre en oeuvre le présent procédé, on peut partir de toute matière consommable plastifiable dont on peut produire par cuisson-extrusion des produits plus particulièrement destinés aux humains, tels que des céréales pour petit-déjeuner, céréales infantiles, amuses-gueules, panures ou confiseries, ou des produits plus particulièrement destinés aux animaux familiers, tels que des croquettes, par exemple.

La matière consommable plastifiable peut ainsi être à base de céréale broyée et d'eau et peut comprendre une majeure partie de farine ou semoule de céréale, notamment de blé, orge, avoine, maïs et/ou riz, et de l'eau, par exemple.

La matière consommable plastifiable peut comprendre en outre de l'amidon, notament de l'amidon de blé, orge, riz, tapioca, pomme de terre ou maïs, du sucre, notamment du saccharose, glucose ou fructose, de l'huile ou de la graisse, notamment de l'huile de beurre ou une huile ou graisse de palmiste, d'arachide ou de maïs, une source de fibre végétale telle que du son, des solides non gras du lait, notamment de la poudre de lait écrémé, et/ou des additifs tels que vitamines, oligoéléments, antioxydants et/ou colorants, par exemple.

La matière consommable plastifiable peut également comprendre, notamment au cas où elle est plus particulièrement destinée à la consommation par des animaux familiers, de la farine ou semoule de légumineuse telle que le soya, de la farine ou de l'hydrolysat de viande ou de poisson, et/ou du suif, par exemple.

On peut choisir les composants de la matière consommable plastifiable et leurs proportions respectives et les introduire individuellement et/ou en prémélange dans le deuxième tronçon de l'extrudeur.

On peut cuire-extruder la matière consommable plastifiable dans le deuxième tronçon de l'extrudeur dans des conditions de pression, cisaillement et température adaptées aux caractéristiques du produit que l'on désire obtenir, notamment en fonction de la teneur en eau et du degré d'expansion que l'on désire obtenir après l'extrusion.

On peut cuire-extruder une matière consommable plastifiable présentant une teneur en eau de 14-23% pour obtenir un produit expansé, par exemple.

On peut cuire-extruder une matière consommable plastifiable présentant une teneur en eau de 24-36% pour obtenir un produit non ou peu expansé, par exemple.

On peut transformer en flocons par laminage et toastage le produit non ou peu expansé découpé, par exemple.

On peut par ailleurs préparer la matière consommable liquide ou pâteuse dans le premier tronçon de l'extrudeur dans des conditions de brassage et de température adéquates pour obtenir un bon mélange de ses composants et une bonne fluidité du mélange (qui assure sa pompabilité), tout en évitant ou au contraire en favorisant, le cas échéant, une réaction de certains de ses composants, notamment une réaction enzymatique ou non enzymatique, par exemple.

On peut ajouter de diverses manières la matière consommable liquide ou pâteuse ainsi préparée à la matière consommable plastifiable cuite-extrudée, notamment par enrobage, coextrusion ou imprégnation dans la masse, par exemple.

On peut préparer une matière consommable liquide d'enrobage sous forme d'un sirop plus particulièrement destiné aux humains qui comprenne notamment du sucre ou du miel et de l'eau ainsi que des composants additionnels tels que poudre de lait, pulpe ou concentré de fruit ou légume, poudre de cacao, colorants, vitamines, oligoéléments, arômes, sel et/ou épices, voire huiles, par exemple.

On peut avantageusement ajouter à un tel sirop des substances ou microorganismes à propriétés probiotiques ou prébiotiques, ou des extraits de plantes fonctionnels tels que des extraits de guarana, ginseng, acérola, cynorrhodon, cola ou garcinia, voire des oligomères procyanidoliques (O.P.C.) tels qu'on peut les extraire de pépins de raisin ou de fraisier, par exemple.

Dans un tel sirop, le sucre peut être du saccharose, du fructose, du dextrose ou du sucre de canne brut, par exemple.

On peut préparer une matière consommable liquide d'enrobage plus particulièrement destinée aux animaux familiers qui comprenne notamment de l'hydrolysat de protéine ou de l'extrait de légumes et de l'eau, ainsi que des composants additionnels tels que, colorants, arômes, vitamines et/ou oligoéléments, par exemple.

On peut préparer une matière consommable pâteuse plus particulièrement destinée aux humains qui comprenne notamment de la viande hâchée, de la sauce tomate et/ou du fromage pour des produits salés, ou des amandes, noisettes, chocolat et/ou confiture pour des produits sucrés, ainsi que des composants additionnels tels que poudre de lait, pulpe ou concentré de fruit ou légume, poudre de cacao, colorants, vitamines, oligoéléments, arômes, sel et/ou épices, voire huiles, par exemple.

On peut avantageusement ajouter à une telle matière consommable pâteuse des substances ou microorganismes à propriétés probiotiques ou prébiotiques, ou des extraits de plantes fonctionnels tels que des extraits de guarana, ginseng, acérola, cynorrhodon, cola ou garcinia, voire des olygomères procyanidoliques (O.P.C.) tels qu'on peut les extraire de pépins de raisin ou de fraisier, par exemple.

On peut préparer une matière consommable pâteuse plus particulièrement destinée aux animaux familiers qui comprenne notamment de l'hydrolysat de protéine, de la graisse, notamment du suif et/ou de la mélasse, ainsi que des composants additionnels tels que colorants, arômes, vitamines et/ou oligoéléments, par exemple.

On peut enrober les morceaux de matière consommable plastifiable cuite-extrudée avant ou au moment de les découper à la sortie de l'extrudeur et prévoir pour cela une coextrusion du brin cuit-extrudé et de la matière consommable liquide ou pâteuse au travers d'une filière comprenant un orifice de sortie annulaire entourant un orifice de sortie central, le brin étant extrudé au travers de l'orifice central et la matière consommable liquide ou pâteuse étant distribuée au travers de l'orifice annulaire autour du brin cuit-extrudé, par exemple.

On peut également enrober les morceaux après les avoir découpés et prévoir pour cela de pulvériser une matière consommable liquide sur les morceaux découpés, tout en les agitant, par exemple.

On peut également encapsuler la matière consommable liquide ou pâteuse par coextrusion de cette matière et du brin cuit-extrudé, au travers d'une filière comprenant un orifice de sortie annulaire entourant un orifice de sortie central, le brin étant extrudé au travers de l'orifice annulaire et la matière consommable liquide ou pâteuse étant distribuée au travers de l'orifice central à l'intérieur du brin cuit-extrudé, par exemple.

On peut également imprégner le brin cuit-extrudé avec la matière consommable liquide ou pâteuse, cette imprégnation étant réalisée dans la masse par ré-injection de la matière consommable liquide ou pâteuse dans le second tronçon de l'extrudeur, à proximité de sa sortie mais suffisamment en amont pour qu'il soit bien mélangé à la masse à extruder avant son extrusion.

On peut avantageusement découper en morceaux le brin cuit-extrudé directement à la sortie du second tronçon de l'extrudeur.

On peut enfin déshydrater le produit composite en morceaux ainsi obtenu jusqu'à une teneur en eau résiduelle inférieure à 5%, par exemple.

L'installation pour la mise en oeuvre du procédé selon la présente invention comprend donc un extrudeur bivis séparé en deux tronçons distincts par un dispositif de séparation dynamique, au moins une filière, des moyens de découpe et un dispositif d'addition d'une matière liquide ou pâteuse.

Le dispositif de séparation dynamique peut être réalisé sous forme d'une zone de blocage à pas inverse du bivis et peut comprendre également des cônes disposés tête-bêche.

On peut prévoir une ouverture de sortie du premier tronçon de l'extrudeur couvrant entièrement une zone de sortie du bivis et empiétant de part et d'autre sur une zone de compression et une zone de séparation dynamique, par exemple.

La zone de sortie peut comprendre un ou plusieurs bilobes sur une vis et une bague sur l'autre vis, la bague faisant face à l'onverture de sortie, par exemple.

On peut prévoir une ouverture de sortie du deuxième tronçon dans l'axe ou sur le côté de l'extrémité aval de l'extrudeur, par exemple.

L'ouverture de sortie du premier tronçon peut être reliée par une conduite à au moins une filière de coextrusion prévue à la sortie de l'extrudeur, ou à au moins une buse de pulvérisation prévue dans un dispositif séparé de l'extrudeur, ou à au moins une ouverture de réinjection prévue dans le fourreau de l'extrudeur à proximité de l'ouverture de sortie du deuxième tronçon, par exemple.

L'ouverture de sortie du second tronçon peut déboucher directement sur la filière, par exemple.

La filière peut être une filière d'extrusion ou de coextrusion au travers de laquelle la matière traitée dans le second tronçon peut être extrudée ou pressée sous l'effet d'une pression exercée par le bivis. Elle peut comprendre un ou plusieurs conduits d'extrusion débouchant sur un ou des orifices de sortie prévus dans une paroi frontale de la filière, par exemple.

Les moyens de découpe peuvent être réalisés sous forme d'un couteau rotatif à plusieurs lames, notamment 2-16 lames, tournant contre le ou les orifices de sortie de la filère, autrement dit contre la paroi frontale de la filière, par exemple.

Le dispositif d'addition peut être prévu à la sortie même du second tronçon de l'extrudeur sous forme d'au moins une filière de coextrusion, ou à proximité de l'ouverture de sortie du deuxième tronçon, en amont de l'ouverture de sortie, sous forme d'au moins une ouverture de réinjection prévue dans le fourreau de l'extrudeur, ou encore à niveau de la sortie ou après la sortie de l'extrudeur sous forme d'au moins une buse de pulvérisation comprise dans un dispositif séparé de l'extrudeur, par exemple.

Un dispositif d'addition séparé peut être prévu sous forme d'un tambour cylindrique creux tournant autour d'un axe généralement horizontal et présentant dans sa partie supérieure ou dans une partie latérale au moins une buse de pulvérisation capable de pulvériser une matière consommable liquide sur le produit à enrober agité dans le cylindre, par exemple.

Un dispositif d'addition préféré de ce type peut être prévu sous forme d'un tambour cylindrique rotatif dont une première partie ajourée entoure la filière de l'extrudeur et les moyens de découpe, dont une deuxième partie non ajourée se prolonge en aval des moyens de découpe, et qui présente dans sa partie supérieure ou dans une partie latérale au moins une buse de pulvérisation capable de pulvériser une matière consommable liquide directement sur les morceaux de produit projetés par les moyens de découpe.

Dans ce dernier cas, les moyens de découpe peuvent être avantageusement entraînés par un moteur hydraulique moins volumineux qu'un moteur traditionnel électrique, par exemple.

Un dispositif de séchage peut être prévu sous forme d'un tunnel de séchage à air chaud, par exemple.

On peut prévoir un dispositif d'alimentation pour chaque tronçon, sous forme d'une ou plusieurs ouvertures d'alimentation prévues dans le fourreau du bivis, à partir de l'extrémité amont de l'extrudeur pour le premier tronçon et à partir d'une zone de transport suivant la zone de blocage du bivis pour le deuxième tronçon, par exemple.

On peut prévoir une géométrie des vis adaptée, pour chaque tronçon, à la matière consommable plastifiable ou à la matière consommable liquide ou pâteuse à traiter et au produit que l'on veut obtenir.

On peut prévoir notamment des zones successives et/ou alternées de transport, transport-mélange-disssolution, compression-dissolution ou mélange-dissolution sur le premier tronçon, ainsi que des zones successives et/ou alternées de transport, compactage, compression, pétrissage ou mélange sur le deuxième tronçon, par exemple.

Pour définir ces différentes zones, on peut jouer sur le pas et le sens des vis, l'espace laissé libre défini notamment par les diamètres respectifs des noyaux et des filets, ou l'intercalage de bilobes de différentes formes, par exemple. On peut également jouer sur une subdivision du fourreau de l'extrudeur en plusieurs compartiments indépendants dont on peut régler individuellement la température par circulation d'un fluide de refroidissement ou de chauffage, par exemple.

Enfin, l'énergie mécanique nécessaire pour préparer la matière consommable liquide ou pâteuse, traiter la matière consommable plastifiable, distribuer ou pulvériser la matière consommable liquide ou pâteuse, et extruder la matière traitée peut être fournie par un seul moyen d'entraînement des vis du bivis, tel qu'un moteur électrique, par exemple.

Pour assurer le passage de la matière consommable plastifiable traitée au travers de la filière, on peut assister ou soulager ce moteur à l'aide d'une pompe positive telle qu'une pompe à engrenage branchée en amont de la filière, par exemple.

On peut également prévoir une commande plus précise de la pulvérisation, la distribution ou l'injection d'une matière consommable liquide ou pâteuse en branchant une pompe positive entre la sortie du premier tronçon de l'extrudeur et la buse de pulvérisation, la filière de coextrusion ou l'ouverture de ré-injection, par exemple.

L'installation selon la présente invention est décrite ci-après en référence au dessin annexé dans lequel:
- la figure 1 représente schématiquement une première forme de réalisation de l'installation dans laquelle un dispositif d'addition est prévu directement à la sortie du deuxième tronçon de l'extrudeur sous forme d'une buse de coextrusion,
- la figure 2 représente schématiquement une deuxième forme de réalisation de l'installation dans laquelle un dispositif d'addition est prévu après la sortie de l'extrudeur sous forme d'au moins une buse de pulvérisation comprise dans un dispositif séparé de l'extrudeur,
- la figure 3 représente schématiquement une troisième forme de réalisation de l'installation dans laquelle un dispositif d'addition est prévu à niveau de la sortie de l'extrudeur sous forme d'au moins une buse de pulvérisation comprise dans un dispositif séparé de l'extrudeur,
- la figure 4 représente schématiquement une quatrième forme de réalisation de l'installation dans laquelle un dispositif d'addition est prévu à proximité de l'ouverture de sortie du deuxième tronçon, en amont de l'ouverture de sortie, sous forme d'au moins une ouverture de réinjection prévue dans le fourreau de l'extrudeur,
- la figure 5 est une vue schématique en coupe verticale de l'extrudeur suivant l'axe de la vis gauche, illustrant une forme de réalisation de la géométrie des vis des installations représentées aux figures 1, 2, 3 et 4,
- la figure 6 est une vue schématique en coupe horizontale de l'extrudeur suivant le plan défini par les axes des deux vis, illustrant la même forme de réalisation de la géométrie des vis que celle représentée à la figure 5, et
- la figure 7 représente de manière plus détaillée la forme de réalisation de l'ouverture de sortie de la matière consommable liquide ou pâteuse représentée à la figure 5.

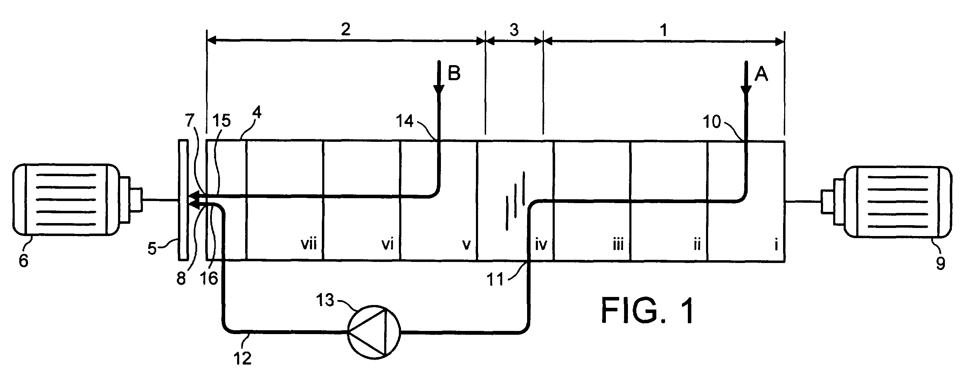

Dans la forme de réalisation représentée à la figure 1, la présente installation comprend un extrudeur bivis séparé en deux tronçons distincts 1 et 2 par un dispositif de séparation dynamique 3, au moins une filière 4, des moyens de découpe 5,6, un dispositif d'addition 7,8, et un dispositif de séchage (non représenté).

Le bivis est entraîné par un moteur 9 et il est renfermé dans un fourreau à double paroi subdivisé en sept compartiments i-vii dans chacun desquels on peut faire circuler un fluide de refroidissement ou de réchauffement.

Dans cette première forme de réalisation de l'installation, les composants d'une matière consommable liquide ou pâteuse A sont introduits dans le premier tronçon 1 au travers d'un dispositif d'alimentation comprenant au moins une ouverture d'alimentation 10 prévue dans le premier compartiment i du fourreau. La matière consommable liquide ou pâteuse préparée dans le premier tronçon 1 sort de ce tronçon par une ouverture de sortie 11 prévue dans le compartiment iv du fourreau à hauteur du dispositif de séparation dynamique 3. Cette ouverture 11 est reliée à la filière 4 par une conduite 12 passant par une pompe positive 13 qui permet d'injecter la matière consommable liquide ou pâteuse dans un conduit d'extrusion 16 débouchant sur un orifice de sortie 8 annulaire ou central.

Une matière consommable plastifiable B est introduite dans le second tronçon 2 au travers d'un dispositif d'alimentation comprenant au moins une ouverture d'alimentation 14 prévue dans le cinquième compartiment v du fourreau, en aval du dispositif de séparation dynamique 3. La masse de matière B traitée dans le deuxième tronçon 2 est pressée au travers d'un conduit d'extrusion 15 débouchant sur un orifice de sortie 7 central ou annulaire.

Dans cette première forme de réalisation, le dispositif d'addition est donc prévu à la sortie même du second tronçon de l'extrudeur où il est réalisé sous forme d'une filière de coextrusion comprenant les deux conduits d'extrusion 15 et 16 débouchant respectivement sur l'orifice central ou annulaire 7 et sur l'orifice annulaire ou central 8, selon que le brin est extrudé au travers de l'orifice central et une matière consommable liquide ou pâteuse est distribuée au travers de l'orifice annulaire autour du brin extrudé, ou que le brin est extrudé au travers de l'orifice annulaire et une matière consommable liquide ou pâteuse est distribuée au travers de l'orifice central à l'intérieur du brin extrudé.

Le brin de produit composite ainsi obtenu est découpé en morceaux à l'aide des moyens de découpe comprenant un couteau rotatif 5 tournant contre les orifices de sortie de la filière 4 et entraîné par un moteur électrique 6.

Les morceaux peuvent être ensuite séchés, le cas échéant, dans un dispositif de séchage (non représenté).

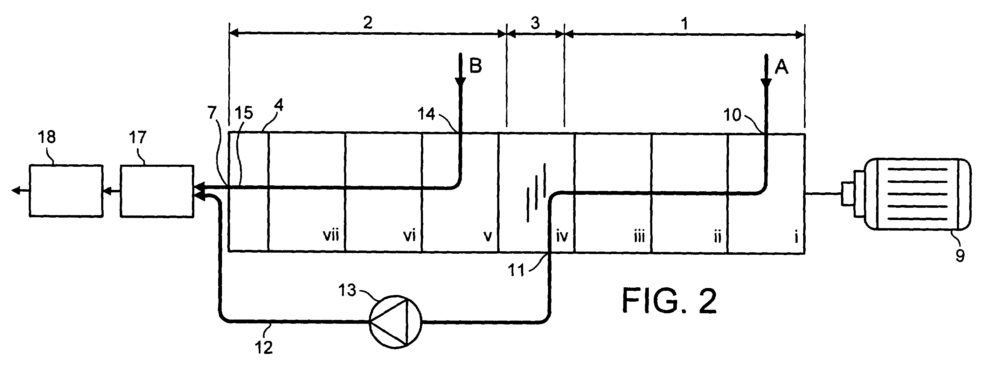

Dans la forme de réalisation représentée à la figure 2, la présente installation est analogue à celle représentée à la figure 1, à l'exception du fait qu'elle comprend un dispositif d'addition 17 prévu après la sortie de l'extrudeur sous forme d'au moins une buse de pulvérisation comprise dans un dispositif séparé de l'extrudeur, et qu'elle comprend en outre un dispositif de séchage représenté en 18.

Le dispositif d'addition séparé 17 est prévu sous forme d'un tambour cylindrique creux (non représenté) tournant autour d'un axe généralement horizontal et présentant dans sa partie supérieure ou dans une partie latérale au moins une buse de pulvérisation (non représentée) capable de pulvériser une matière consommable liquide sur le produit à enrober agité dans le cylindre.

Dans cette deuxième forme de réalisation de l'installation, une matière consommable liquide A est préparée dans le premier tronçon et est injectée dans la buse de pulvérisation par l'intermédiaire de la conduite 12.

Une matière consommable plastifiable B est traitée dans le deuxième tronçon 2 et est pressée au travers d'au moins un conduit d'extrusion 15 de la filière débouchant sur au moins un orifice de sortie 7. Le brin cuit-extrudé ainsi obtenu est découpé en morceaux par des moyens de découpe (non représentés) et les morceaux sont introduits, voire transportés dans le dispositif d'addition 17 pour y être enrobés du produit liquide consommmable pulvérisé sur eux par la buse de pulvérisation.

Les morceaux enrobés sont ensuite séchés dans le dispositif de séchage 18 qui peut être réalisé sous forme d'un séchoir à air chaud, par exemple.

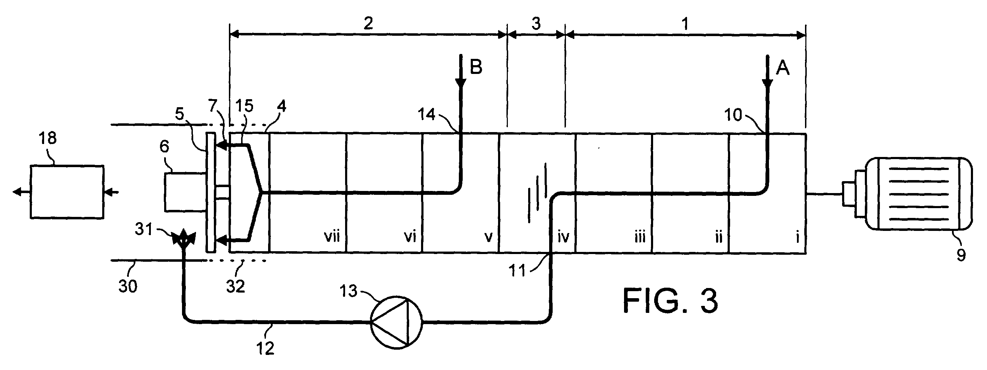

Dans la forme de réalisation représentée à la figure 3, la présente installation est analogue à celle représentée à la figure 1, à l'exception du fait qu'elle comprend un dispositif d'addition 30,31 prévu à niveau de la sortie de l'extrudeur sous forme d'au moins une buse de pulvérisation comprise dans un dispositif séparé de l'extrudeur, et qu'elle comprend en outre un dispositif de séchage représenté en 18.

Dans cette troisième forme de réalisation de l'installation, une matière consommable liquide A est préparée dans le premier tronçon 1 et est injectée dans au moins une buse de pulvérisation 31 par l'intermédiaire de la conduite 12.

Une matière consommable plastifiable B est traitée dans le deuxième tronçon 2 et est pressée au travers d'au moins un conduit d'extrusion 15 de la filière débouchant sur au moins un orifice de sortie 7. Le brin cuit-extrudé ainsi obtenu est découpé en morceaux par des moyens de découpe rattachés à la filière 4 et comprenant un couteau rotatif 5 tournant contre les orifices de sortie de la filière et entraîné par un moteur hydraulique 6.

Le dispositif d'addition comprend au moins une buse de pulvérisation 31 prévue dans un tambour cylindrique rotatif 30 dont une première partie ajourée 32 entoure les moyens de découpe 5,6 et la filière 4, et dont une deuxième partie non ajourée se prolonge en aval des moyens de découpe.

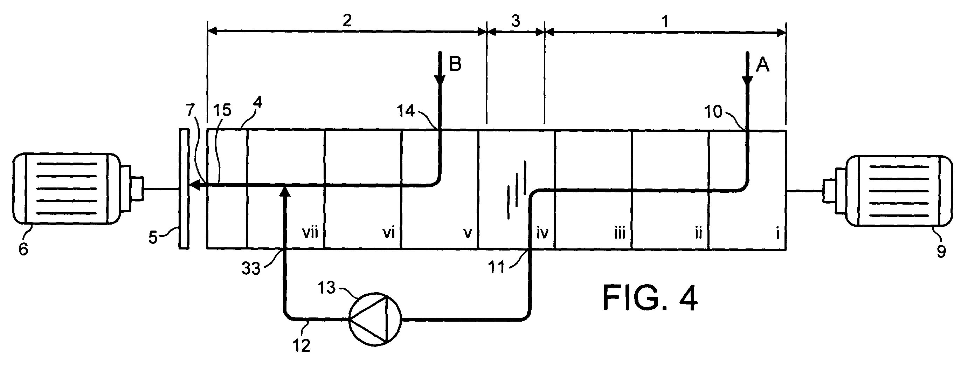

Dans la forme de réalisation représentée à la figure 4, la présente installation est analogue à celle représentée à la figure 1, à l'exception du fait qu'elle comprend un dispositif d'addition prévu en amont de la sortie de l'extrudeur, sous forme d'au moins une ouverture de réinjection 33 prévue dans le fourreau de l'extrudeur au milieu du dernier compartiment vii du deuxième tronçon 2.

Dans cette quatrième forme de réalisation de l'installation, une matière consommable pâteuse A est préparée dans le premier tronçon 1 et est ré-injectée dans le tronçon 2 à proximité de sa sortie mais suffisammment en amont pour qu'elle soit bien mélangée à une matière consommable plastifiable B traitée dans le tronçon 2, avant que cette dernière ne soit pressée au travers d'au moins un conduit d'extrusion 15 de la filière débouchant sur au moins un orifice de sortie 7.

Le brin composite ainsi obtenu est découpé en morceaux par des moyens de découpe comprenant un couteau rotatif 5 tournant contre les orifices de sortie de la filière et entraîné par un moteur électrique 6.

Les morceaux peuvent être ensuite séchés, le cas échéant, dans un dispositif de séchage (non représenté).

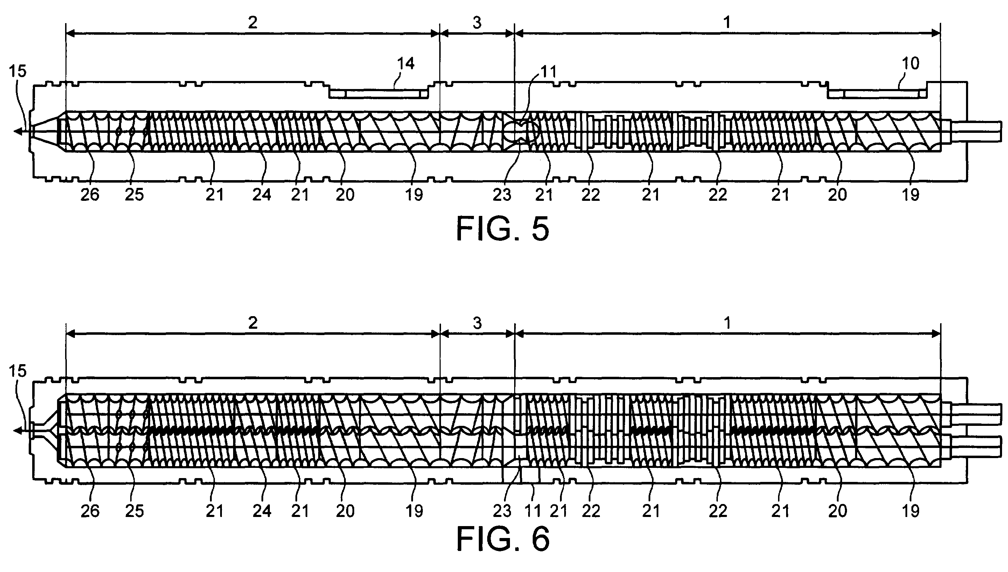

Les figures 5 et 6 représentent schématiquement une forme de réalisation de la géométrie des vis qui peut être utilisée indifféremment dans chacune des installations représentées aux figures 1 à 4.

Dans le tronçon 1, les vis présentent successivement des zones de transport 19 (200/100), transport-mélange-dissolution 20 (100/66), compression-dissolution 21 (200/33), mélange-dissolution 22 (140/bilobes divers), compression-dissolution 21 (100/33), mélange-dissolution 22 (150/bilobes divers), compression-dissolution 21 (100/33), sortie de sirop 23 (deux bilobes de 15 mm sur une vis, bague de 30 mm sur l'autre vis), séparation dynamique 3 (cônes de 30 mm, 50/-25, 100/-50).

Dans le tronçon 2, les vis présentent successivement des zones de transport 19 (200/100), transport 20 (100/66) compression 21 (100/33), compression 24 (100/50), compression 21 (200/33), pétrissage 25 (100/-33) et compression 26 (100/35).

Les chiffres entre parenthèses donnent la longueur de la zone et la longueur du pas en mm, pour des vis de 88 mm de diamètre et un entre-axes de 72 mm, l'installation comprenant en l'occurrence un extrudeur bivis CLEXTRAL BC-72.

La géométrie représentée n'est pas limitée à ces dimensions données à titre d'exemple. Elle peut être transposée sur d'autres modèles d'extrudeurs, notamment les modèles BC-45 (vis de 55 mm de diamètre, entre-axes de 45 mm) ou BC-92 (vis de 115 mm de diamètre, entre-axes de 92 mm) de la même série, par exemple.

Les filets de vis sont de préférence doubles, excepté le pas inverse de la zone de blocage qui est de préférence simple.

Au contraire du pas inverse de la zone de pétrissage 25 qui présente sur son pourtour des encoches pour le passage de la masse traitée, le pas inverse de la zone de blocage 3 n'en présente aucune de manière à pouvoir jouer avec la plus grande efficacité son rôle de dispositif de séparation dynamique.

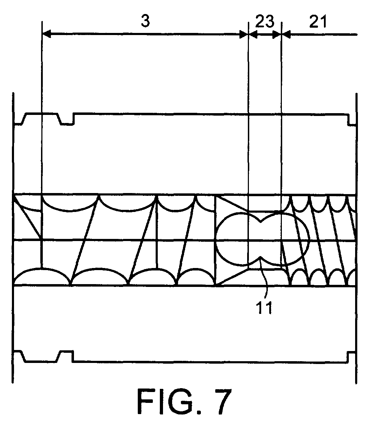

Comme on le voit plus en détail à la figure 7, l'ouverture de sortie 11 du premier tronçon 1 de l'extrudeur présente une forme oblongue axiale, en l'occurrence la forme d'un huit, couvrant toute la longueur de la zone de sortie 23 (face à la bague), empiétant sur la zone de compression 21 et la zone de séparation 3 (face aux cônes).

Les exemples ci-après sont présentés à titre d'illustration du procédé selon la présente invention et des produits qu'il permet d'obtenir. Les pourcentages et parties y sont indiqués en poids sauf indication contraire.

### Exemple 1

On utilise une installation telle que représentée aux figures 2 ou 3 et 5-7, dans laquelle l'extrudeur est un bivis CLEXTRAL type BC-72 ayant un diamètre de vis de 88 mm et une longueur de vis de 2100 mm.

Le dispositif d'addition est réalisé sous forme d'un tambour cylindrique creux prévu après la sortie de l'extrudeur, tournant autour d'un axe généralement horizontal et présentant dans sa partie supérieure trois buses à deux fluides présentant un diamètre intérieur de 2,5 mm, ou sous forme d'un tambour cylindrique rotatif partiellement ajouré entourant la filière de l'extrudeur et les moyens de découpe, et présentant dans une partie latérale une rangée horizontale de cinq buses de pulvérisation dont la plus en amont est disposée à hauteur des moyens de découpe.

Le dispositif de séchage est un tunnel de séchage à air chaud.

Pour préparer un sirop dans le premier tronçon de l'extrudeur, on y dissout 60 kg/h de sucre semoule dans 13 kg/h d'eau, et l'on y porte la température de la solution de sucre ou sirop à 76°C.

Pour préparer une base céréale dans le second tronçon de l'extrudeur, on y mélange les composants suivants (kg/h):

| | |
|---|---|
| Semoule de maïs | 84,0 |
| Farine de blé | 11,4 |
| Saccharose | 4,8 |
| Chlorure de sodium | 1,2 |
| Carbonate de calcium | 0,6 |
| Farine d'avoine | 6,0 |
| Amidon de blé | 12,0 |
| Graisse de palmiste | 10,0 |
| Eau | 13,0 |

Pour ce faire, on mélange d'abord les poudres à sec. On mélange ensuite le mélange sec, la graisse et l'eau.

On traite le mélange, à savoir on le cuit-extrude à 150°C sous 155 bar, les vis de l'extrudeur tournant à 218 rpm.

La masse thermoplastique ainsi obtenue est extrudée au travers d'une filière réalisée sous forme d'une plaque frontale percée de quatre conduits cylindriques débouchant chacun sur un orifice de sortie circulaire de 5 mm de diamètre.

Les brins cylindriques ainsi extrudés-expansés dans l'espace ambiant sont immédiatement découpés à l'aide d'un couteau à quatre lames tournant à 6000 rpm contre la paroi frontale de la filière, le couteau étant entraîné par un moteur électrique traditionnel (option choisie dans le cas où le dispositif d'addition est prévu après la sortie de l'extrudeur) ou par un moteur hydraulique solidaire de la filière (option permettant l'usage d'un dispositif d'addition au niveau de la filière).

On obtient ainsi des boulettes de céréale expansées présentant un diamètre d'environ 10 mm.

On enrobe les boulettes en leur pulvérisant le sirop dessus tout en les agitant, le sirop étant pulvérisé sous l'effet d'un courant d'air d'entraînement projeté hors de la buse sous une pression de 1,8 bar.

On séche les boulettes de céréales avec de l'air à 113°C jusqu'à une teneur en eau résiduelle inférieure à 3%.

On obtient ainsi des boulettes de céréales pout petit déjeuner enrobées de sucre légères et croquantes.

### Exemple 2

On prépare un aliment composite à intérieur mou et extérieur croquant pour animaux familiers à l'aide d'une installation telle que représentée à la figure 1.

Pour préparer une matière consommable pâteuse pour l'intérieur mou dans le premier tronçon du bivis (CLEXTRAL type BC-72), on y introduit et y mélange en continu les composants suivants dans les proportions suivantes données en % en poids:

| | |
|---|---|
| Hydrolysat de protéines de viande | 40 |
| Lécithine | 0,5 |
| Graisse de poule | 45 |
| Mélasse | 10,5 |
| Colorant | 3 |
| Vitamines et oligoéléments | 1 |

Dans le premier tronçon, les vis présentent un rapport longueur sur diamètre de 9:1 (pour un rapport longueur totale sur diamètre de 20:1) et elles se composent d'éléments de vis de transport et de bilobes de mélanges. La température du fourreau est maintenue à environ 49°C.

Pour préparer une matière consommable plastifiable, à savoir une base céréale pour l'extérieur croquant dans le deuxième tronçon du bivis, on y introduit, y mélange et y traite en continu les composants suivants dans les proportions suivantes données en % en poids:

| | |
|---|---|
| Blé moulu | 45 |
| Maïs moulu | 24 |
| Farine de poulet | 13 |
| Farine de soya | 13 |
| Vitamines | 1 |
| Oligoéléments | 0,5 |
| Suif | 3,5 |

Dans le second tronçon, les vis présentent un rapport longueur sur diamètre de 10:1 et elles se composent d'éléments de vis à pas double pour le transport, à pas inverse pour la compression et le cisaillement et à pas simple trapezoïdal pour l'expulsion ou pressage. La température du fourreau est maintenue à environ 120°C.

La consistance de la matière pâteuse pour l'intérieur mou est ajustée dans le premier tronçon en sorte qu'elle soit juste pompable au travers de la filière mais qu'elle se prenne en masse rapidement après la sortie de la filière.

La matière alimentaire plastifiée et chauffée sous l'effet de la pression, du cisaillement et de la température dans le second tronçon s'expanse fortement au sortir de la filière et forme une coquille qui devient solide et croustillante lors du refroidissement et du séchage.

La matière pâteuse et la base céréale sont coextrudés à des débits respectifs tels que le rapport pondéral entre l'intérieur mou et l'extérieur croquant du produit composite soit de 40%:60%.

L'activité de l'eau de l'intérieur mou et celle de l'extérieur croquant sont réglées en sorte que l'intérieur reste mou et l'extérieur reste croquant durant une période de conservation d'au moins six mois.

### Exemple 3

On prépare un aliment composite imprégné dans la masse à l'aide d'une installation telle que représentée à la figure 4.

Pour préparer un sirop d'imprégnation dans le premier tronçon du bivis (CLEXTRAL type BC-72), on y introduit et y mélange en continu de la chair de maquereau, une enzyme pour sa digestion, du saccharose et de la mélasse dans les proportions suivantes données en % en poids:

| | |
|---|---|
| Emulsion de chair de maquereau | 80 |
| Enzyme | 0,5 |
| Saccharose | 10 |
| Mélasse | 9,5 |

Dans le premier tronçon, les vis présentent un rapport longueur sur diamètre de 9:1 (pour un rapport longueur totale sur diamètre de 20:1) et elles se composent d'éléments de vis de transport et de bilobes de mélanges. La vitesse de rotation des vis est choisie en sorte que la chair de maquereau soit hachée. La température du fourreau est maintenue à 120°C.

Pour préparer une matière consommable plastifiable, à savoir une base céréale, on introduit dans le deuxième tronçon du bivis, on y mélange et on y traite en continu les composants suivants dans les proportions suivantes données en % en poids:

| | |
|---|---|
| Blé | 45 |
| Maïs | 15 |
| Farine de poulet | 17 |
| Soya | 14,3 |
| Vitamines | 1 |
| Oligoéléments | 0,5 |
| Colorant | 3 |
| Suif | 4,2 |

Dans le second tronçon, les vis présentent un rapport longueur sur diamètre de 10:1 et elles se composent d'éléments de vis à pas double pour le transport, à pas inverse pour la compression et le cisaillement et à pas simple trapezoïdal pour l'expulsion ou pressage. La température du fourreau est maintenue à environ 120°C.

Le sirop d'imprégnation préparé dans le premier tronçon est donc ré-injecté dans le deuxième tronçon à proximité de sa sortie mais suffisammment en amont pour qu'il soit bien mélangé à la base céréale avant son extrusion.

Le rapport pondéral du sirop et de la base céréale dans le produit composite est de 10%:90%.

Le produit composite ainsi obtenu présente un arôme appétissant de maquereau et se révèle agréable à consommer aussi bien pour les humains que pour les animaux familiers.

## Revendications

1. Procédé de fabrication d'un produit consommable composite par double extrusion, dans lequel on prépare une matière consommable liquide ou pâteuse dans un premier tronçon d'un extrudeur bivis, on cuit-extrude une matière consommable plastifiable dans un second tronçon de l'extrudeur bivis séparé dynamiquement du premier, on obtient au moins un brin d'une masse cuite-extrudée, on le découpe en morceaux, on ajoute la matière consommable liquide ou pâteuse à la masse cuite-extrudée et l'on obtient des morceaux d'un produit consommable composite.

2. Procédé selon la revendication 1, dans lequel on ajoute la matière consommable liquide ou pâteuse à la masse cuite-extrudée par enrobage.

3. Procédé selon la revendication 2, dans lequel on enrobe les morceaux avant ou au moment de les découper à la sortie de l'extrudeur, en coextrudant le brin cuit-extrudé et la matière consommable liquide ou pâteuse au travers d'une filière comprenant un orifice de sortie annulaire entourant un orifice de sortie central, le brin étant extrudé au travers de l'orifice central et la matière consommable liquide ou pâteuse étant distribuée au travers de l'orifice annulaire autour du brin cuit-extrudé.

4. Procédé selon la revendication 2, dans lequel on enrobe les morceaux après les avoir découpés, en pulvérisant une matière consommable liquide sur les morceaux découpés, tout en les agitant.

5. Procédé selon la revendication 1, dans lequel on encapsule la matière liquide ou pâteuse, en coextrudant cette matière et le brin cuit-extrudé au travers d'une filière comprenant un orifice de sortie annulaire entourant un orifice de sortie central, le brin étant extrudé au travers de l'orifice annulaire et la matière consommable liquide ou pâteuse étant distribuée au travers de l'orifice central à l'intérieur du brin cuit-extrudé.

6. Procédé selon la revendication 1, dans lequel on imprégne le brin cuit-extrudé avec la matière consommable liquide ou pâteuse, en ré-injectant cette matière dans le second tronçon de l'extrudeur à proximité de sa sortie.

7. Installation pour la fabrication d'un produit consommable composite par double extrusion, comprenant un extrudeur bivis séparé en deux tronçons distincts par un dispositif de séparation dynamique, au moins une filière, des moyens de découpe et un dispositif d'addition d'une matière liquide ou pâteuse.

8. Installation selon la revendication 7, dans laquelle le dispositif de séparation dynamique comprend une zone de blocage à pas inverse du bivis.

9. Installation selon la revendication 8, dans laquelle le dispositif de séparation dynamique comprend également des cônes disposés tête-bêche.

10. Installation selon la revendication 8, dans laquelle une ouverture de sortie du premier tronçon de l'extrudeur couvre entièrement une zone de sortie du premier tronçon et empiète de part et d'autre sur une zone de compression et sur le dispositif de séparation dynamique.

11. Installation selon la revendication 10, dans laquelle la zone de sortie du premier tronçon comprend un ou plusieurs bilobes sur une vis et une bague sur l'autre vis, la bague faisant face à l'ouverture de sortie.

12. Installation selon la revendication 7, dans laquelle l'ouverture de sortie du premier tronçon est reliée par une conduite à un dispositif d'addition comprenant au moins une filière de coextrusion prévue à la sortie du deuxième tronçon de l'extrudeur.

13. Installation selon la revendication 7, dans laquelle l'ouverture de sortie du premier tronçon est reliée à au moins une buse de pulvérisation prévue dans un dispositif d'addition séparé de l'extrudeur.

14. Installation selon la revendication 12, dans laquelle le dispositif d'addition séparé est réalisé sous forme d'un tambour cylindrique rotatif dont une première partie ajourée entoure la filière de l'extrudeur et les moyens de découpe et dont une deuxième partie non ajourée se prolonge en aval des moyens de découpe, la ou les buses de pulvérisation étant prévues dans sa partie supérieure ou dans une partie latérale.

15. Installation selon la revendication 7, dans laquelle l'ouverture de sortie du premier tronçon est reliée par une conduite à un dispositif d'addition comprenant au moins une ouverture de ré-injection prévue dans le fourreau de l'extrudeur à proximité de l'ouverture de sortie du deuxième tronçon.

16. Produit consommable composite obtenu par le procédé selon l'une des revendications 1 à 6.

17. Produit consommable composite enrobé obtenu par le procédé selon les revendications 1 et 3 ou 4.

18. Produit consommable composite coextrudé à intérieur mou et extérieur croquant obtenable par le procédé selon les revendications 1 et 5.

19. Produit consommable composite imprégné dans la masse obtenable par le procédé selon les revendications 1 et 6.
